(19) Europäisches Patentamt
European Patent Office
Office européen des brevets

(11) **EP 4 116 781 B1**

(12) **EUROPÄISCHE PATENTSCHRIFT**

(45) Veröffentlichungstag und Bekanntmachung des Hinweises auf die Patenterteilung:
**28.02.2024   Patentblatt 2024/09**

(21) Anmeldenummer: **22160954.8**

(22) Anmeldetag: **09.03.2022**

(51) Internationale Patentklassifikation (IPC):
**G05B 19/042** (2006.01)    **G05B 19/418** (2006.01)
**G05B 23/02** (2006.01)

(52) Gemeinsame Patentklassifikation (CPC):
**G05B 19/042; G05B 19/41875; G05B 23/0283;**
G05B 2219/31455

(54) **VERFAHREN ZUM ÜBERWACHEN EINER PRODUKTIONSANLAGE ZUM BEHANDELN VON GETRÄNKEN UND ÜBERWACHUNGSSYSTEM FÜR DIE PRODUKTIONSANLAGE**

METHOD FOR MONITORING A PRODUCTION PLANT FOR THE TREATMENT OF BEVERAGES AND MONITORING SYSTEM FOR THE PRODUCTION PLANT

PROCÉDÉ DE SURVEILLANCE D'UNE INSTALLATION DE PRODUCTION PERMETTANT DE TRAITER DES BOISSONS ET SYSTÈME DE SURVEILLANCE POUR L'INSTALLATION DE PRODUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.07.2021   DE 102021117635**

(43) Veröffentlichungstag der Anmeldung:
**11.01.2023   Patentblatt 2023/02**

(73) Patentinhaber: **Krones AG**
**93073 Neutraubling (DE)**

(72) Erfinder:
• **Sabah, Sami**
**93073 Neutraubling (DE)**

• **Duerr, Christoph**
**93073 Neutraubling (DE)**
• **Hoeller, Stefan**
**93073 Neutraubling (DE)**
• **Richter, Volker**
**93073 Neutraubling (DE)**

(74) Vertreter: **Grünecker Patent- und Rechtsanwälte PartG mbB**
**Leopoldstraße 4**
**80802 München (DE)**

(56) Entgegenhaltungen:
**DE-A1-102019 203 062     DE-A1-102019 203 412**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Überwachen einer Produktionsanlage zum Behandeln von Getränken und ein Überwachungssystem für die Produktionsanlage.

Aus dem Stand der Technik ist es bekannt, in einer Produktionsanlage zum Behandeln von Getränken, wie beispielsweise einer Kurzzeiterhitzungsanlage, offene Produktkreise hinsichtlich der Ausbildung von Ablagerungen zu kontrollieren, die beispielsweise zu einem Fouling und/oder zu einer unerwünschten Verengung einzelner Abschnitte des Produktkreises führen können. Es ist in diesem Zusammenhang ferner bekannt, auf derartige Veränderungen durch Anpassung von Stellgrößen einzelner Regelorgane, wie beispielsweise durch Veränderung des Öffnungsgrads von Dampfregelventilen, und/oder durch Anpassung von Produktionsparametern, wie beispielsweise einem in der Produktionsanlage herrschenden Druck, zu reagieren.

Nachteilig ist bei diesem Vorgehen jedoch, dass lediglich die überwachten Ist-Zustände dahingehend ausgewertet werden, ob ein unzulässiger Betriebszustand vorliegt und eine entsprechende Warnmeldung ausgegeben werden soll. Es wäre jedoch insbesondere auch wünschenswert, den weiteren Behandlungsverlauf abschätzen zu können, gegebenenfalls auch produktspezifisch.

Derartige Produktionsanlagen umfassen zudem stets Sekundärkreise mit Austauschmedien, wie beispielsweise Heizwasser oder Kühlwasser, in denen sich über einen längeren Zeitraum in der Regel ebenso Ablagerungen, wie beispielsweise Kalkschichten bilden können. Diese werden, da sie die zu behandelnden Produkte nicht berühren, als weniger problematisch angesehen und daher meist nur mit nachrangiger Priorität überwacht und/oder entfernt. Obwohl sich dies nicht direkt auf die Behandlungsqualität auswirken muss, kann der Energieverbrauch durch solche Ablagerungen erheblich zunehmen. Auch können Beschädigungen und/oder Produktionsausfälle einzelner Wärmetauscher die Folge sein.

Da sich mit zunehmender Schichtdicke der Energieeintrag im betroffenen Wärmetauscher verschlechtert, müssen die Regelventile, welche den Zufluss der jeweiligen Energieträger steuern, weiter geöffnet werden. Es hat sich daher als praktikabel herausgestellt, den Öffnungsgrad der Regelventile in regelmäßigen Abständen zu kontrollieren und daraus eine Tendenz zu ermitteln, um den Verblockungsgrad des jeweiligen Wärmetauschers hinsichtlich seines Ist-Zustands und eines prognostizierten zukünftigen Verlaufs abzuschätzen.

Nachteilig ist jedoch, dass zugehörige Überwachungsintervalle zuverlässig eingehalten und die nötigen Berechnungen durch einzelne Bediener vorgenommen werden müssen. Die Gewinnung, Auswertung und Speicherung zugehöriger Daten erfordert relativ viel Zeit und ein hohes Maß an Prozesswissen. Zudem ist dieses Vorgehen fehleranfällig.

Auf ähnliche Weise ist es bei derartigen Produktionsanlagen üblich, den Produktionsstart, die zugehörige Sortenauswahl und Reinigungsschritte durch manuelle Bedingung auszulösen. Auch dies ist zeitaufwändig und fehleranfällig, vor allem für unerfahrene Bediener oder bei manchmal unvermeidlicher Abwesenheit von Bedienern.

Es besteht daher der Bedarf für ein Verfahren zum Überwachen einer Produktionsanlage zum Behandeln von Getränken sowie für ein entsprechendes Überwachungssystem, mit denen sich wenigstens eines der voranstehend beschriebenen Probleme beseitigen oder zumindest abmildern lässt.

Aus der DE 10 2019 203062 A1 ist bekannt, Ausleitkriterien zum selektiven Ausleiten fehlerhaft produzierter oder befüllter Kunststoffflaschen auf der Grundlage einer eingangsseitigen und/oder ausgangsseitigen sensorischen Überprüfung der Zwischenprodukte und einer Analyse dadurch gewonnener Initial- und Ergebnisdaten einzelner Verarbeitungsschritte zu ermitteln. Die Datenanalyse kann auf maschinellen Lernprozessen beruhen, um eine Selbstoptimierung der jeweiligen Streckblas- und/oder Abfüllanlage durchzuführen.

Aus der DE 10 2019 203412 A1 ist zudem eine automatisierte Prozessführung von Produktionsund Reinigungsprozessen in Vakuumanlagen beispielsweise zur Mikrolithographie bekannt. Die gestellte Aufgabe wird mit einem Verfahren nach Anspruch 1 und mit einem Überwachungssystem nach Anspruch 10 gelöst.

Das Verfahren dient zum Überwachen einer Produktionsanlage zum Behandeln von Getränken und umfasst die folgenden Schritte u.a. mit den folgenden Merkmalen: Auswählen eines sortenspezifischen Datensatzes mit Initial-Eigenschaftsdaten eines zu behandelnden Getränks und mit Soll-Zustandsdaten der Produktionsanlage; Ermitteln von wenigstens drei chargenspezifischen Datensätzen mit Ist-Zustandsdaten der Produktionsanlage und mit Ist-Eigenschaftsdaten des Getränks, während der Behandlung einer Charge des Getränks; elektronische Echtzeitauswertung der sortenspezifischen und chargenspezifischen Datensätze in einem Prognosemodell auf der Grundlage wenigstens eines selbstlernenden Algorithmus; und Ausgabe von Benutzerinformation umfassend eine gemäß der Echtzeitauswertung bis zum Ende der Charge und/oder bis zu einer voraussichtlich erforderlichen ortsgebundenen Zwischenreinigung oder Endreinigung (CIP) verbleibenden (prognostizierten) Rest-Produktionsdauer.

Dadurch lässt sich die Produktionsplanung präzisieren. Die Benutzerinformation kann beispielsweise an eine Leitstelle weitergegeben werden. Bediener können mit ausreichender Vorlaufzeit über die bis zum Chargenende oder bis zu einer Reinigung verbleibende Produktionszeit informiert werden. Die Produktionsanlage ist beispielsweise eine Kurzzeiterhitzungsanlage.

Der selbstlernende Algorithmus ermöglicht außerdem eine mit zunehmender Chargenanzahl immer effizientere Produktion (im Vergleich zur Erstinbetriebnahme der Produktionsanlage), indem die gewonnenen Datensätze gegebenenfalls historisch miteinander verglichen und ausgewertet werden. Einzelne Produktionsparameter lassen sich dann entsprechend auf der Grundlage und/oder unter Einbeziehung des Prognosemodells optimieren. Zu diesem Zweck geeignete selbstlernende Algorithmen sind prinzipiell bekannt und daher nicht im Detail erläutert.

Die sortenspezifischen Initial-Eigenschaftsdaten des Getränks und/oder die chargenspezifischen Ist-Eigenschaftsdaten des Getränks betreffen beispielsweise einen pH-Wert, Brix-Wert und/oder Leitwert des Getränks, dessen Viskosität und/oder Informationen zu Inhaltsstoffen, wie Verdickungsmitteln und/oder Stabilisatoren. Unter Initial-Eigenschaften sind hier das Getränk charakterisierende Eigenschaften zu verstehen, die vor der Behandlung bekannt sind, beispielsweise aus Rezepturen und/oder Zulieferspezifikationen und/oder infolge von Vorab-Kontrollmessungen. Die sortenspezifischen Soll-Zustandsdaten und die chargenspezifischen Ist-Zustandsdaten der Produktionsanlage betreffen beispielsweise Erhitzungstemperaturen, Volumenströme (und damit Durchfluss und Verweildauer des Produkts), Förderdrücke, Stellwerte von Stellorganen und Pumpen oder dergleichen Sollwerte und/oder Messwerte.

Erfindungsgemäß betreffen die sortenspezifischen und chargenspezifischen Datensätze einen offenen Primärkreis(lauf), in dem das Getränk bei der Behandlung geführt wird. Das Behandlungsergebnis lässt sich dann sortenspezifisch optimieren und der zugehörige Produktionsablauf hinsichtlich Effizienz und Qualität optimieren.

Im Überwachungssystem der Produktionsanlage können sortenspezifische Produktparameter, beispielsweise ein Eiweißgehalt, ein pH-Wert, die Produktviskosität und/oder Informationen zu Inhaltsstoffen, wie Verdickungsmitteln und/oder Stabilisatoren, im Sinne von Sollwerten hinterlegt und deren Einhaltung laufend überwacht werden. Beispielsweise kann anhand des Eiweißgehalts und/oder pH-Werts die Wahrscheinlichkeit und/oder ein Zeitpunkt für das Auftreten von Fouling prognostiziert werden und durch rechtzeitige Reinigung vermieden werden.

Der sortenspezifische Datensatz umfasst zusätzlich für die Behandlung relevante Soll-Zustandsdaten der Produktionsanlage, wie beispielsweise Soll-Temperatur, Soll-Durchfluss und/oder Soll-Verweildauer des Getränks bei der Behandlung / Erhitzung. Zugehörige chargenspezifische Ist-Zustandsdaten sind beispielsweise primärseitige Durchflüsse an Wärmetauschern, Stellgrößen von Pumpen und Regelventilen sowie primärseitige Druckprofile vor und nach den jeweiligen Wärmetauschern.

Anhand der sortenspezifischen und chargenspezifischen Datensätze, die auch als vorgegebene und tatsächliche Produktdaten und Behandlungsdaten des Getränks verstanden werden können, kann die Behandlung selbstlernend optimiert, gegebenenfalls an geänderte Produkt- und/oder Anlagenparameter automatisch angepasst und Fehlbedienung vermieden werden.

Vorzugsweise betreffen wenigstens die chargenspezifischen Datensätze ferner wenigstens einen mit dem Primärkreis zusammenwirkenden geschlossenen Sekundärkreis(lauf) für ein Austauschmedium. Das Austauschmedium ist beispielsweise Heizwasser oder Kühlwasser. Zugehörige Ist-Zustandsdaten sind beispielsweise sekundärseitige Durchflüsse an Wärmetauschern, Stellgrö-ßen von Pumpen und Regelventilen oder dergleichen.

Damit lässt sich beispielsweise die Notwendigkeit einer ortgebundenen Reinigung (CIP) feststellen. Beispielsweise kann eine Verschlechterung von Wärmeübergängen vom Öffnungsgrad eines zugehörigen Regelventils abgeleitet werden. Beispielsweise hat sich als praktikabel herausgestellt, dass eine Reinigung durchzuführen ist, wenn im Zuge von Prüfintervallen festgestellt wird, dass sich der Öffnungsgrad eines bestimmten Ventils gegenüber einem Vergleichswert, der beispielsweise unmittelbar nach einer ortsgebundenen Reinigung vorliegt, um mehr als 30 % vergrößert hat. Zudem muss eine Reinigung spätestens dann durchgeführt werden, wenn bei einem Stellwert von 100 % (Maximalwert) Sortenparameter nicht mehr eingehalten werden können.

Unter ortsgebundener Reinigung bzw. CIP sind z.B. Verfahren zur Reinigung und Spülung von verfahrenstechnischen Anlagen und Komponenten wie beispielsweise Rohrleitungen, Behälter und Wärmetauscher zu verstehen.

Je nach Reinigungsanforderungen können unterschiedliche Reinigungsprogramme ausgewählt werden. Eine typische konventionelle Reinigung, wie diese z.B. am Ende einer Produktion durchgeführt werden kann, umfasst beispielsweise Vorspülen mit Wasser, Behandlung mit heißer Lauge (85°C), Zwischenspülen mit Warmwasser, Behandlung mit Säure und/oder Spülen mit frischem Wasser. Je nach Anforderung, kann auch eine Sterilisation der Anlage mittels Heißwassers oder eines Desinfektionsmittels erfolgen.

Darüber hinaus sind Zwischenreinigungen bekannt, in welchem ein verkürztes Reinigungsprogramm durchgeführt wird. Diese sind vor allem bei Produkten relevant, die stark zu Belagsbildung neigen. Hierzu wird die Produktion bei Bedarf kurz unterbrochen. Es erfolgt dann beispielsweise ein Zwischenspülen mit heißem Wasser, Reinigung mit Lauge und Nachspülen mit Wasser. Häufig erfolgt die Zwischenreinigung auf dem Temperaturniveau der Produktion. Nach erfolgter Zwischenreinigung wird die Produktion fortgesetzt.

Zudem ist es bekannt, einzelne Komponenten oder Anlagenteile, wie bspw. Wärmetauscher, entgegengesetzt zur regulären (im Produktionsmodus vorhandenen) Strömungsrichtung zu reinigen. Somit können u.a. Feststoffe verbessert ausgetragen werden. Beispielsweise kann eine Pumpe zur Förderung des Reinigungsmittels mehrmals für eine vorbestimmte Zeit so betrieben werden, dass das Reinigungsmedium in umgekehrter Richtung durch die Komponente(n) strömt. Auch ist es denkbar, die Pumpe so zu betreiben, dass diese mehrmals solange fördert, bis ein vorab festgelegter Volumenstrom erreicht wird. Die Strömungsumkehr kann auch mittels geeigneter Ventilschaltungen realisiert sein.

In ähnlicher Weise können steigende sekundärseitige Druckverluste an Wärmetauschern über Drucksensoren oder die Stellwerte der zugehörigen Pumpen ermittelt werden. Steigen derartige Werte im Zuge von Prüfintervallen beispielsweise um mehr als 30 % gegenüber einem Vergleichswert für einen frisch gereinigten Sekundärkreis, sollte in der Regel eine Reinigung durchgeführt werden. Auch hier muss eine ortsgebundene Reinigung spätestens dann durchgeführt werden, wenn eingestellte Sortenparameter nicht mehr eingehalten werden können.

Zu diesem Zweck können Öffnungszustände einzelner Ventile im laufenden Betrieb regelmäßig erfasst und in einer zentralen Datenbank gespeichert werden. Hierfür eignen sich prinzipiell herkömmliche Datenbanksysteme. Zusätzlich können prozessrelevante Daten, wie beispielsweise einzelne Programmschritte und/oder Sortenparameter, gespeichert werden. Derartige miteinander korrespondierende Daten können durch computergestützte Berechnung, beispielsweise hinsichtlich eines Trends des jeweiligen Öffnungszustands, analysiert werden.

Beispielsweise kann eine Warnmeldung ausgegeben werden, wenn der Öffnungsgrad eines bestimmten Ventils oder ein entsprechender Stellwert einer Pumpe sich in unzulässiger Weise von einem Referenzwert für frisch gereinigten Sekundärkreis unterscheidet. Ein entsprechender Reinigungsschritt zur Reduzierung und/oder Entfernung von Belägen in dem betroffenen Wärmetauscher und/oder Leitungen kann dann zu einem geeigneten Zeitpunkt ausgelöst werden.

Vorzugsweise umfasst die Benutzerinformation Angaben dahingehend, welcher Anteil der Charge bis zu einer prognostizierten Zwischenreinigung behandelt werden kann. Es lässt sich dann beispielsweise abschätzen, ob die Behandlung der Charge zur Qualitätssicherung durch eine Zwischenreinigung unterbrochen werden muss, oder ob eine durchgehende Behandlung bis zum Chargenende trotz des prognostizierten Bedarfs für eine Zwischenreinigung vertretbar ist, beispielsweise unter qualitätssichernder Anpassung einzelner Produktionsparameter.

Vorzugsweise wird aus den chargenspezifischen Datensätzen wenigstens eine Kennzahl der Behandlung maschinell berechnet und mit einem entsprechenden sortenspezifischen Grenzwert der Behandlung verglichen, wobei die wenigstens eine Kennzahl insbesondere eine mittlere logarithmische Temperaturdifferenz an einem Wärmetauscher und/oder ein Druckverlust in einem Wärmetauscher und/oder ein Druckverlust in einer Heißhaltestrecke ist.

Die mittlere logarithmische Temperaturdifferenz ist ein bewährtes Maß für den Wärmeübergang an Wärmetauschern. Üblicherweise nimmt dieser Wert im Laufe der Produktion zu, da sich der zugehörige Wärmedurchgangskoeffizient durch Belagbildung verschlechtert. Um eine bestimmte Wärmemenge zu übertragen, muss dann die Temperaturdifferenz erhöht werden, wofür die Temperatur des jeweiligen Heizmediums im Sekundärkreis zu erhöhen ist. Diese Kennzahl eignet sich besonders für Wärmetauscher im Hochtemperaturbereich, also für Kurzzeit-Erhitzungsstufen beispielsweise unmittelbar vor Heißhaltung des jeweiligen Getränks.

Der Druckverlust als Differenz zwischen jeweiligem eingangsseitigen und ausgangsseitigen Druck eignet sich im besonderen Maße als Kennzahl für Wärmetauscher, Heißhaltestrecken und/oder Vorheißhaltestrecken zur Proteindenaturierung.

Solche Kennzahlen ermöglichen eine anlagenübergreifende Behandlungsoptimierung und/oder einen Vergleich mit historischen Datensätzen/Kennzahlen.

Vorzugsweise werden die chargenspezifischen Datensätze in einer Datenbank gespeichert und mit entsprechenden historischen chargenspezifischen Datensätzen früherer Chargen des Getränks maschinell verglichen und/oder kombiniert, wobei darauf basierend das Prognosemodell mittels des selbstlernenden Algorithmus initialisiert und/oder angepasst wird. Durch einen Vergleich mit historischen Daten kann beispielsweise eine verbleibende Produktionszeit bis zum Chargenende oder bis zu einer Zwischenreinigung exakter bestimmt werden. Zudem lässt sich die Optimierung der jeweiligen Behandlung sowohl sortenspezifisch als auch anlagenspezifisch mit größerer Effizienz optimieren, da gegebenenfalls auf ähnliche Kombinationen von chargenspezifischen Daten und Zustandsdaten von Produktionsanlagen zugegriffen werden kann. Derartige Erkenntnisse können ab der Erstinstallation genutzt und vom selbstlernenden Algorithmus im laufenden Produktionsbetrieb weiter verfeinert werden.

Vorzugsweise umfasst der chargenspezifische Datensatz wenigstens einen der folgenden Parameter des Sekundärkreises: Vorlauftemperatur und Rücklauftemperatur; Förderdruck; Durchflussrate; und Stellwert wenigstens eines durchflussbegrenzenden Stellorgans und/oder wenigstens einer Pumpe. Damit lässt sich ein Trend für eine unerwünschte Belagbildung im Sekundärkreis maschinell berechnen und für eine Prognose verbleibender Produktionszeiten nutzen.

Vorzugsweise wird im Rahmen der elektronischen Echtzeitauswertung eine Abweichung AW des wenigstens einen Stellwerts SW von einem jeweils zugeordneten Referenzwert (Sollwert) RW des durchflussbegrenzenden Stellorgans oder der Pumpe berechnet, wobei der Referenzwert / Sollwert jeweils repräsentativ für einen ordnungsgemäßen Zustand unmittelbar nach Reinigung des Sekundärkreises ist. Dies ermöglicht eine maschinelle Abschätzung des Verblockungsgrads einzelner Bestandteile des Sekundärkreises.

Vorzugsweise wird ein Reinigungsbedarf des Sekundärkreises durch die elektronische Echtzeitauswertung festgestellt, wenn für die Abweichung AW folgende Bedingung erfüllt ist: (SW - RW) / (100 - RW) > 0,3. Dies ermöglicht eine automatische Terminierung von ortsgebundenen Reinigungsschritten (CIP-Reinigung) anhand in der Praxis bewährter Überwachungskriterien.

Vorzugsweise wird im Zulauf zur Produktionsanlage wenigstens eine Eigenschaft des Getränks überwacht, insbesondere ein Leitwert und/oder ein Brix-Wert und/oder ein pH-Wert und/oder eine Trübung, wobei darauf basierend der sortenspezifische Datensatz automatisch ausgewählt oder zur Auswahl vorgeschlagen wird. Dadurch lässt sich Fehlbedienung bei der Sortenauswahl und entsprechender Auswahl von Behandlungsparametern vermeiden. Im Einzelnen können falsche oder zeitverzögerte Bedienung, falsche Programmauswahl und/oder falsche Entscheidungen bei der Anwahl einzelner Behandlungsparameter vermieden oder zumindest die Wahrscheinlichkeit dafür reduziert werden.

Die zugehörigen Sensoren sind vorzugsweise stromaufwärts eines in der Produktionsanlage vorhandenen Vorlauftanks angeordnet. Durch derartige am Zulauf der Produktionsanlage angeordnete Sensoren können die jeweiligen Produkte anhand ihrer Inhaltsstoffe maschinell erkannt und zugeordnete Behandlungsparameter aus sortenspezifisch hinterlegten Datensätzen ausgewählt werden.

Insbesondere während der Behandlung von Getränken, die anfällig für Fouling sind, können Druckverluste an Wärmetauschern oder dergleichen in unerwünschtem oder unzulässigem Maß ansteigen. In diesem Fall kann das Getränk von dem Überwachungssystem der Produktionsanlage automatisch ausgefahren werden und eine ortsgebundene Reinigung, beispielsweise eine Zwischenreinigung oder Endreinigung, automatisch gestartet werden. Die Dauer der Reinigung kann dann beispielsweise in Abhängigkeit von einem zuvor festgestellten Druckverlust am Wärmetauscher automatisch festgelegt werden. Dadurch lässt sich beispielsweise vermeiden, dass Wärmetauscher durch Fouling vollständig zusetzen oder nur mit unerwünscht hohem Aufwand oder nicht ausreichend gereinigt werden können.

Durch die Überwachung der Getränkeeigenschaften im Zulauf zur Produktionsanlage lässt sich ein vorgegebener Produktionsablauf mit unterschiedlichen Produkten auslösen, überwachen und/oder steuern. Beispielsweise können Sortenwechsel durch zulaufseitige Erkennung von Getränkeeigenschaften automatisch initiiert und/oder überwacht werden. Auch können einzelne Behandlungseinheiten oder die Produktionsanlage insgesamt bei Produktionspausen in einen energiesparenden Wartemodus wechseln oder die einzelnen Behandlungseinheiten hochfahren, sobald der Produktionsbeginn unmittelbar bevorsteht. Dies ist mit den beschriebenen Sensoren automatisch möglich.

Anhand von Trübungssensoren, Brix-Sensoren und/oder Leitwertsensoren kann eine erforderliche Spüldauer automatisch bestimmt werden, um sowohl die verwendeten Medien, wie beispielsweise Wasser, Luft, Strom oder Dampf, als auch dafür erforderliche Zeit einzusparen.

Das beschriebene Überwachungssystem dient der Überwachung einer Produktionsanlage zum Behandeln von Getränken und umfasst: eine elektronische Auswerteeinheit zum Auswählen eines gespeicherten sortenspezifischen Datensatzes mit Eigenschaften eines zu behandelnden Getränks und mit Soll-Zustandsdaten der Produktionsanlage, wobei die Auswerteeinheit ferner zum Auswerten von chargenspezifischen Datensätzen wenigstens mit Ist-Zustandsdaten der Produktionsanlage und mit Ist-Eigenschaftsdaten einer darin in Behandlung stehenden Charge des Getränks ausgebildet ist; und Sensoren zur Messung der Ist-Zustandsdaten und gegebenenfalls der Ist-Eigenschaftsdaten.

Erfindungsgemäß ist die Auswerteeinheit u.a. ferner wie folgt programmiert: zur elektronischen Echtzeitauswertung des sortenspezifischen Datensatzes und von wenigstens drei chargenspezifischen Datensätzen in einem Prognosemodell auf der Grundlage wenigstens eines selbstlernenden Algorithmus; und zur Ausgabe von Benutzerinformation umfassend eine gemäß der Echtzeitauswertung bis zum Ende der Charge und/oder bis zu einer voraussichtlich erforderlichen Zwischenreinigung oder Endreinigung prognostizierte Rest-Produktionsdauer. Damit lassen sich die bezüglich des Anspruchs 1 beschriebenen Vorteile erzielen.

Ferner sind die Sensoren in einem offenen Primärkreis für das Getränk angeordnet und umfassen: einen zulaufseitigen pH-Sensor; einen zulaufseitigen Brix-Sensor; einen zulaufseitigen Leitwertsensor; wenigstens einen Durchflussmesser; wenigstens einen Druckmesser vor einer Erhitzungsstufe der Produktionsanlage; wenigstens je einen Temperatursensor vor und nach der Erhitzungsstufe; und/oder wenigstens je einen Temperatursensor vor und nach einer Heißhaltestrecke der Produktionsanlage.

Vorzugsweise sind die Sensoren in wenigstens einem geschlossenen Sekundärkreis zum Wärmeaustausch mit dem Primärkreis angeordnet und umfassen: je einen Temperatursensor im Vorlauf und Rücklauf des Wärmetausches; einen vorlaufseitigen Drucksensor; und wenigstens einen Durchflussmesser.

Das Überwachungssystem gemäß wenigstens einer der beschriebenen Ausführungsformen ist vorzugsweise Bestandteil einer Produktionsanlage, die ferner umfasst: eine damit überwachte Erhitzungsstufe und Heißhaltestrecke zur Haltbarmachung des Getränks; eine vorgeschaltete Vorwärmstufe; und einen nachgeschalteten Rückkühler mit Rückgewinnungskreis zur Wärmeversorgung der Vorwärmstufe.

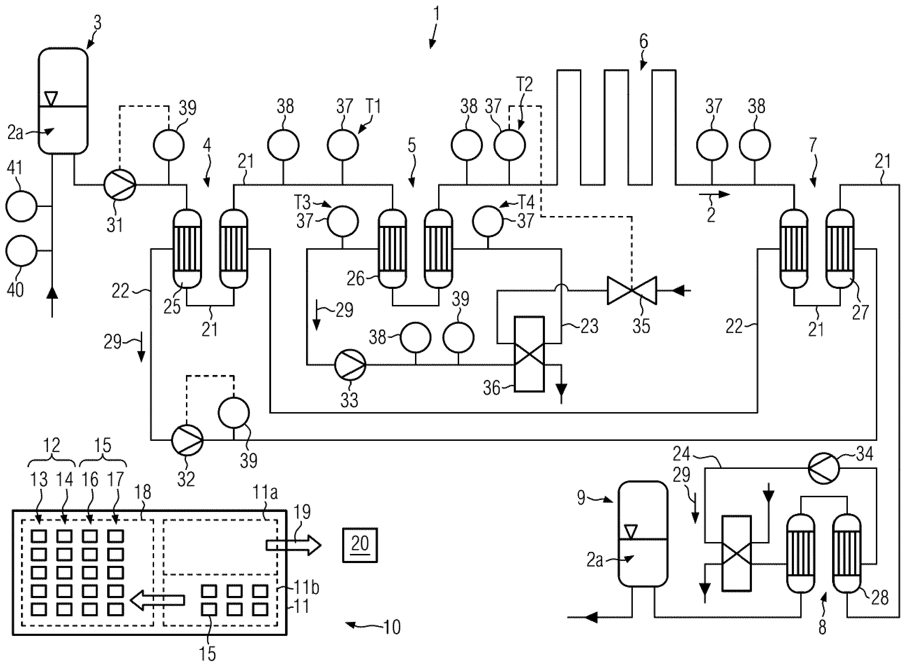

Eine bevorzugte Ausführungsform der Erfindung ist zeichnerisch dargestellt. Die einzige Figur zeigt ein schematisches Fließbild einer Produktionsanlage mit dem Überwachungssystem.

Wie die Figur erkennen lässt, umfasst die Produktionsanlage 1 zum Behandeln eines Getränks 2 in einer bevorzugten Ausführungsform einen Vorlauftank 3 zum Vorhalten einer zu behandelnden Charge 2a des Getränks 2, eine Vorwärmstufe 4 zum Vorwärmen des Getränks 2, eine Erhitzungsstufe 5 insbesondere zur Kurzzeiterhitzung des Getränks 2, eine Heißhaltestrecke 6 zum Heißhalten des zuvor erhitzten Getränks 2 zu dessen Haltbarmachung, eine Rückkühlstufe 7 zur Wärmerückgewinnung aus dem behandelten Getränk 2, eine Korrekturkühlstufe 8 zum Abkühlen des behandelten Getränks 2 auf eine Lagertemperatur und/oder Abfülltemperatur und einen sterilen Puffertank 9 zum Vorhalten der behandelten Charge 2a des Getränks 2 für eine anschließende Abfüllung in Flaschen oder dergleichen Behälter (nicht dargestellt).

Die Produktionsanlage 1 umfasst ferner ein Überwachungssystem 10 mit einer elektronischen Auswerteeinheit 11 zum Auswählen wenigstens eines gespeicherten sortenspezifischen Datensatzes 12 mit Initial-Eigenschaftsdaten 13 des zu behandelnden Getränks 2 und mit Soll-Zustandsdaten 14 der Produktionsanlage 1. Die Auswerteeinheit 11 ist ferner zum Auswerten von chargenspezifischen Datensätzen 15 wenigstens mit Ist-Zustandsdaten 16 der Produktionsanlage 1 und gegebenenfalls auch mit Ist-Eigenschaftsdaten 17 einer in der Produktionsanlage 1 zu behandelnden / in Behandlung stehenden Charge 2a des Getränks 2 ausgebildet.

Chargenspezifische Datensätze 15 werden während der Behandlung der Charge 2a in geeigneten Zeitintervallen gewonnen, vorzugsweise im Zuge kontinuierlicher Produktionsüberwachung.

Die Ist-Zustandsdaten 16 der Produktionsanlage 1 betreffen die für die Charge 2a verwendeten Anlagen- und Behandlungsparameter, wie beispielsweise Stellwerte von Ventilen und Pumpen, Druckmesswerte, Temperaturmesswerte, Durchflussmesswerte oder dergleichen.

Die Ist-Eigenschaftsdaten 17 der Getränkecharge 2a betreffen Produktparameter wie beispielsweise pH-Messwerte, Brix-Messwerte oder dergleichen.

Die Ermittlung von Ist-Eigenschaftsdaten 17 ist prinzipiell vorteilhaft, jedoch für das beschriebene Verfahren nicht zwingend erforderlich. Hierfür können die chargenspezifischen Datensätze 15 auch nur Ist-Zustandsdaten 16 der Produktionsanlage 1 umfassen.

Die Auswerteeinheit 11 ist zur Ausführung eines Prognosemodells 18 (Rechenmodells) mit wenigstens einem selbstlernenden Algorithmus programmiert, um damit den jeweils ausgewählten sortenspezifischen Datensatz 12 und wenigstens drei während der Behandlung der Charge 2a gewonnene chargenspezifische Datensätze 15 miteinander in Echtzeit zu verrechnen und auf dieser Grundlage Benutzerinformation 19 (Bedienerinformation) mit Prognosedaten auszugeben.

Die Benutzerinformation 19 beinhaltet beispielsweise eine in der Auswerteeinheit 11 berechnete Rest-Produktionsdauer, die laut Prognose bis zum Ende der zu verarbeitenden Charge 2a oder bis zu einer voraussichtlich erforderlichen ortsgebundenen Zwischenreinigung (CIP) oder Endreinigung der Produktionsanlage 1 verbleibt. Die Benutzerinformation 19 kann beispielsweise an einer Ausgabeeinheit 11a der Auswerteeinheit 11 und/oder an einer Leitstelle 20 für die Produktionsanlage 1 angezeigt werden.

Die beispielhaft dargestellte Produktionsanlage 1 umfasst einen zulaufseitig und ablaufseitig offenen Primärkreis 21 für das Getränk 2, einen ersten geschlossenen Sekundärkreis 22 zur Wärmerückgewinnung und zur Wärmeversorgung der Vorwärmstufe 4, einen zweiten geschlossenen Sekundärkreis 23 zur Wärmeversorgung der Erhitzungsstufe 5 und einen dritten geschlossenen Sekundärkreis 24 zum Korrekturkühlen des behandelten Getränks 2.

Der erste Sekundärkreis 21 führt durch einen ersten Wärmetauscher 25 zum Vorwärmen des Getränks 2. Der zweite Sekundärkreis 23 führt durch einen zweiten Wärmetauscher 26 zum Kurzzeiterhitzen des Getränks 2. Der erste Sekundärkreis 22 führt ferner durch einen dritten Wärmetauscher 27 zum Rückkühlen des wärmebehandelten Getränks 2 zwecks Wärmerückgewinnung. Der dritte Sekundärkreis 24 umfasst schließlich einen vierten Wärmetauscher 28 zum Korrekturkühlen des behandelten Getränks 2 auf eine Lagertemperatur bzw. Abfülltemperatur.

Zum entsprechenden Wärmeaustausch mit den in den Sekundärkreisläufen 22 bis 24 geführten Wärmeaustauschmedien 29, beispielsweise Heizwasser oder Kühlwasser, führt der Primärkreis 21 das Produkt 4 auf prinzipiell bekannte Weise nacheinander durch die Wärmetauscher 25 bis 28.

Gemäß einer alternativen Ausführungsform kann der erste Wärmetauscher 25 und der dritte Wärmetauscher 27 zusammengefasst werden. Dabei würde die Primärseite des ersten Wärmetauschers 25 in direktem wärmeübertragendem Kontakt mit der Primärseite des dritten Wärmetauschers 27 stehen. In dieser auch als Produkt/Produkt-Regeneration bekannten Variante kann der erste Sekundärkreislauf 22 entfallen.

Beispielhaft dargestellt sind ferner eine erste Pumpe 31 für den Primärkreis 21 sowie zweite bis vierte Pumpen 32 bis 34 für den ersten bis dritten Sekundärkreis 22 bis 24. Sämtliche Pumpen 31 bis 34 sind vorzugsweise Bestandteil des Überwachungssystems 10 derart, dass Einstellwerte der Pumpen 31 bis 34 ausgelesen und beispielsweise in der Auswerteeinheit 11 des Überwachungssystems 10 elektronisch ausgewertet werden können.

In vergleichbarer Weise umfasst das Überwachungssystem 10 wenigstens ein Stellorgan 35, dessen Stellung ebenso ausgelesen und von der elektronischen Auswerteeinheit 11 ausgewertet werden kann. Hierfür ist beispielhaft und stellvertretend ein Dampfregelventil dargestellt, mit dem die Dampfzufuhr in einen Dampferhitzer 36 und damit die Wärmeversorgung des zweiten Sekundärkreises 23 eingestellt werden kann.

Bestandteile des Überwachungssystems 10 sind ferner Temperatursensoren 37, Drucksensoren 38 und Durchflussmesser 39, die an verschiedenen Stellen des Primärkreises 21 und der Sekundärkreise 22 bis 24 vorhanden sein können.

Das Überwachungssystem 10 umfasst vorzugsweise ferner dem Vorlauftank 3 vorgeschaltete zulaufseitige Sensoren zur Bestimmung von Eigenschaften des Getränks 2, insbesondere in Form eines pH-Sensors 40 und/oder eines Brix-Sensors 41. Ebenso denkbar an dieser Stelle sind Sensoren zur Bestimmung des Leitwerts des Getränks 2 und/oder der Trübung des Getränks 2 (jeweils nicht dargestellt).

Derartige Messungen sind aber auch an anderen Stellen des Primärkreises 21 denkbar, beispielsweise eine pH-Messung unmittelbar vor der Erhitzungsstufe 5, um Ist-Eigenschaftsdaten 17 der Charge 2a beispielsweise für eine Fouling-Prognose zu bestimmen.

Die genannten Sensoren und Messgeräte übermitteln jeweils Ist-Zustandsdaten 16 der Produktionsanlage 1 und Ist-Eigenschaftsdaten 17 des darin behandelten Getränks 2 als Bestandteil der chargenspezifischen Datensätze 15.

Wie die Figur diesbezüglich andeutet, ist beispielsweise die Pumpe 31 des Primärkreises 21 durchflussgeregelt, vorzugsweise ebenso die Pumpe 32 des ersten Sekundärkreises 22. Ebenso ist beispielhaft zu erkennen, dass das Stellorgan 35 (Dampfregelventil) vorzugsweise temperaturgeregelt ist in Abhängigkeit einer zwischen der Erhitzungsstufe 5 und der Heißhaltestrecke 6 gemessenen Temperatur T2. Zu erkennen ist ebenso, dass in der Erhitzungsstufe 5 vorzugsweise sowohl primärseitig als auch sekundärseitig die Temperatur T1 des Getränks 2 und die Temperaturen T3, T4 des Wärmeaustauschmediums 29 (Heizwasser) im zweiten Sekundärkreis 23 jeweils eingangsseitig/vorlaufseitig und ausgangsseitig/rücklaufseitig gemessen werden. Die damit gewonnenen Ist-Zustandsdaten 16 werden ebenso der Auswerteeinheit 11 des Überwachungssystems 10 zugeführt.

Anhand der Erhitzungsstufe 5 ist beispielhaft die Ermittlung einer für die Behandlung des Getränks 2 charakteristischen Kennzahl $\Delta T_{ln}$, also der mittleren logarithmischen Temperaturdifferenz des Wärmeaustauschs, dargestellt. Demnach wird mit den Temperatursensoren 37 die primärseitige Eingangstemperatur T1 und die primärseitige Ausgangstemperatur T2 gemessen. Ebenso wird auf diese Weise die sekundärseitige Vorlauftemperatur T4 und die sekundärseitige Rücklauftemperatur T3 gemessen. Aus diesen Messwerten lässt sich die Kennzahl $\Delta T_{ln}$ wie folgt in der Auswerteeinheit 11 maschinell berechnen:

$$\Delta T_{ln} = \frac{(T4-T2)-(T3-T1)}{\ln\frac{T4-T2}{T3-T1}}$$

Ebenso ließe sich als geeignete Kennzahl ein Druckverlust im zweiten Wärmetauscher 26 ermitteln, also jeweils eine Differenz zwischen dem eingangsseitigen/vorlaufseitigen Druck und dem ausgangsseitigen/rücklaufseitigen Druck. Dies ist prinzipiell sowohl primärseitig als auch sekundärseitig möglich.

Eingangs-/ausgangsseitige Druckverluste könnten ebenso für die Heißhaltestrecke 6 oder für eine (nicht dargestellte) Vorheißhaltestrecke zur Proteindenaturierung ermittelt werden.

Derartige Kennzahlen können laufend mit entsprechenden Sollwerten und/oder Grenzwerten in der Auswerteeinheit 11 verglichen werden und/oder in das Prognosemodell 18 einfließen. Ebenso ist eine Ausgabe von Kennzahlen, beispielsweise der mittleren logarithmischen Temperaturdifferenz $\Delta T_{ln}$ in der Erhitzungsstufe 5, als Bestandteil der Benutzerinformation 19 möglich.

Mit den zulaufseitigen Sensoren im Bereich des Vorlauftanks 3, also beispielsweise mit dem pH-Sensor 40 und/oder dem Brix-Sensor 41 lässt sich optional feststellen oder überprüfen, welches Getränk 2 dem Vorlauftank 2 zugeführt wird. Damit lässt sich beispielsweise die Auswahl des sortenspezifischen Datensatzes 12 automatisch vornehmen und/oder in Kombination mit manueller Eingabe kontrollieren. Zu diesem Zweck wird in der Auswerteeinheit 11 überprüft, ob die zulaufseitig gemessenen Getränkeeigenschaften mit der Produktionsplanung übereinstimmen, oder es wird eine entsprechende Anpassung der Produktionsplanung an das zulaufseitig festgestellte Getränk 2 vorgenommen.

Die Auswerteeinheit 11 greift auf eine Datenbank 11b mit historischen chargenspezifischen Datensätzen 15 zu, mit denen während der Behandlung unterschiedlicher Chargen 2a desselben Getränks 2 ermittelte chargenspezifische Datensätze 15 verglichen werden können, um charakteristische Trends abzuleiten und den selbstlernenden Algorithmus des Prognosemodells 18 zu trainieren. Die Datenbank 11b könnte in die Auswerteeinheit 11 integriert oder anderweitig mit dieser verbunden sein.

Hierfür können prinzipiell bekannte Algorithmen verwendet werden, die im Rahmen sogenannter künstlicher Intelligenz eine selbstlernende Anpassung des Prognosemodells 18 beispielsweise auf der Grundlage der jeweils verfügbaren Datensätze 12, 15 ermöglichen.

Anhand der von eingebundenen Stellorganen 35, wie beispielsweise dem beschriebenen Dampfregelventil, und/oder Pumpen 31 bis 34 übermittelten Stellwerte lässt sich automatisch abschätzen, wie sich die Durchflussverhältnisse durch Ablagerungen in Wärmetauschern, Heißhaltestrecken und/oder Leitungen verändern / verschlechtern, um daraus eine Tendenz abzuleiten und zu prognostizieren, wann die überwachten Primär-/Sekundärkreise 21 bis 24 so stark verblockt sind, dass eine ortsgebundene Zwischenreinigung oder Endreinigung des jeweiligen Kreises und/oder der Produktionsanlage 1 insgesamt nötig ist.

Mit dem Überwachungssystem 10 können die beschriebenen Überwachungen und Prognosen in der Auswerteeinheit 11 in Echtzeit ausgeführt und auf dieser Grundlage ständig Prognosen über eine bis zum Chargenende oder eine nötige Zwischenreinigung oder Endreinigung ermittelt werden. Das Prognosemodell 18 passt sich hierbei vorzugsweise laufend an die zunehmende Anzahl verfügbarer Datensätze 12, 15 an, beispielsweise durch Vergleich aktuell ermittelter chargenspezifischer Ist-Zustandsdaten 16 und Ist-Eigenschaftsdaten 17 mit entsprechenden zuvor an anderen Chargen 2a desselben Getränks 2 gewonnenen historischen Ist-Daten.

Zu Chargenbeginn kann zulaufseitig eine optionale Kontrolle und/oder Erkennung von Getränkeeigenschaften maschinell vorgenommen werden, um die Auswahl des sortenspezifischen Datensatzes 12 entweder automatisch vorzunehmen oder auf diesem Wege eine manuelle Eingabe durch Bediener zu kontrollieren. Auf diese Weise ist eine fehlerfreie Bedingung sowohl zeitsparend als auch mit geringerem Kenntnisstand des einzelnen Bedieners zuverlässig möglich.

Die laufende Echtzeitauswertung der sortenspezifischen und chargenspezifischen Datensätze 12, 15 im Vergleich zueinander ermöglicht zudem eine qualitätssichernde und effiziente Behandlung des Getränks 2 gegebenenfalls unter Ausnutzung einer maximalen Behandlungsdauer bis zu einer ortsgebundenen Zwischenreinigung und/oder Endreinigung der Produktionsanlage 1 oder einzelner Behandlungseinheiten davon.

**Patentansprüche**

1. Verfahren zum Überwachen einer Produktionsanlage (1) zum Behandeln von Getränken, mit folgenden Schritten:

- Auswählen eines sortenspezifischen Datensatzes (12) mit Initial-Eigenschaftsdaten (13) eines zu behandelnden Getränks (2) und Soll-Zustandsdaten (14) der Produktionsanlage;
- Ermitteln von wenigstens drei chargenspezifischen Datensätzen (15) mit Ist-Zustandsdaten (16) der Produktionsanlage und mit Ist-Eigenschaftsdaten (17) des Getränks jeweils durch deren sensorische Messung während der Behandlung einer Charge (2a) des Getränks;
- Elektronische Echtzeitauswertung der sortenspezifischen und chargenspezifischen Datensätze in einem Prognosemodell (18) auf der Grundlage wenigstens eines selbstlernenden Algorithmus; und
- Ausgabe von Benutzerinformation (19) umfassend eine gemäß Echtzeitauswertung bis zum Ende der Charge und/oder bis zu einer voraussichtlich erforderlichen Zwischenreinigung oder Endreinigung prognostizierte Rest-Produktionsdauer,

wobei eine elektronische Auswerteeinheit (11) zur Ausführung des Prognosemodells (18) mit dem wenigstens einen selbstlernenden Algorithmus programmiert ist, damit der jeweils ausgewählte sortenspezifische Datensatz (12) und die während der Behandlung der Charge (2a) gewonnenen chargenspezifischen Datensätze (15) miteinander in Echtzeit verrechnet werden und auf dieser Grundlage die Benutzerinformation (19) ausgegeben wird,
wobei die Auswerteeinheit (11) auf eine Datenbank (11b) mit historischen chargenspezifischen Datensätzen (15) zugreift, mit denen während der Behandlung unterschiedlicher Chargen (2a) desselben Getränks (2) ermittelte chargenspezifische Datensätze (15) verglichen werden, um charakteristische Trends abzuleiten und den selbstlernenden Algorithmus zu trainieren, und
wobei die sortenspezifischen und chargenspezifischen Datensätze (12, 15) einen offenen Primärkreis (21) für das Getränk (2) betreffen und durch Messung mit einem zulaufseitigen pH-Sensor (40), einem zulaufseitigen Brix-Sensor (41), einem zulaufseitigen Leitwertsensor, wenigstens einem Durchflussmesser (39), wenigstens einem Drucksensor (38) vor einer Erhitzungsstufe (5) der Produktionsanlage (1), wenigstens je einem Temperatursensor (37) vor und nach der Erhitzungsstufe und/oder wenigstens je einem Temperatursensor vor und nach einer Heißhaltestrecke (6) der Produktionsanlage ermittelt werden.

2. Verfahren nach Anspruch 1, wobei wenigstens die chargenspezifischen Datensätze (15) ferner wenigstens einen mit dem Primärkreis (21) zusammenwirkenden geschlossenen Sekundärkreis (22 - 24) für ein Austauschmedium (29) betreffen.

3. Verfahren nach einem der vorigen Ansprüche, wobei die Benutzerinformation (19) Angaben umfasst dahingehend, welcher Anteil der Charge (2a) bis zu einer prognostizierten ortsgebundenen Zwischenreinigung oder Endreinigung behandelt werden kann.

4. Verfahren nach wenigstens einem der vorigen Ansprüche, wobei aus den chargenspezifischen Datensätzen (15) wenigstens eine Kennzahl der Behandlung maschinell berechnet und mit einem entsprechenden sortenspezifischen Grenzwert der Behandlung verglichen wird, wobei die wenigstens eine Kennzahl insbesondere eine mittlere logarithmische Temperaturdifferenz ($\Delta T_{ln}$) an einem Wärmetauscher (25 - 28) und/oder ein Druckverlust in einem Wärmetauscher und/oder ein Druckverlust in einer Heißhaltestrecke (6) ist.

5. Verfahren nach wenigstens einem der vorigen Ansprüche, wobei die chargenspezifischen Datensätze (15) in einer Datenbank (11b) gespeichert und mit entsprechenden historischen chargenspezifischen Datensätzen (15) früherer Chargen (2a) des Getränks (2) maschinell verglichen und/oder kombiniert werden, und wobei darauf basierend das Prognosemodell (18) initialisiert und/oder angepasst wird.

6. Verfahren nach Anspruch 2, wobei der chargenspezifische Datensatz (15) wenigstens einen der folgenden Parameter des Sekundärkreises (21 - 24) umfasst: Vorlauftemperatur und Rücklauftemperatur; Förderdruck; Durchflussrate; und Stellwert (SW) wenigstens eines durchflussbegrenzenden Stellorgans (35) und/oder wenigstens einer Pumpe (31 - 34).

7. Verfahren nach Anspruch 6, wobei im Rahmen der elektronischen Echtzeitauswertung eine Abweichung (AW) des wenigstens einen Stellwerts (SW) von einem jeweils zugeordneten Referenzwert (RW) des durchflussbegrenzenden Stellorgans (35) oder der Pumpe (31 - 34) berechnet wird, der jeweils repräsentativ für einen ordnungsgemäßen Zustand unmittelbar nach Reinigung des Sekundärkreises (22 - 24) ist.

8. Verfahren nach Anspruch 7, wobei ein Reinigungsbedarf des Sekundärkreises durch die elektronische Echtzeitauswertung festgestellt wird, wenn folgende Bedingung für die Abweichung (AW) erfüllt ist: (Stellwert - Referenzwert) / (100 - Referenzwert) > 0,3.

9. Verfahren nach wenigstens einem der vorigen Ansprüche, wobei im Zulauf zur Produktionsanlage (1) wenigstens eine Eigenschaft des Getränks überwacht wird, insbesondere ein Leitwert und/oder Brix-Wert und/oder pH-Wert, und darauf basierend der sortenspezifische Datensatz (12) automatisch ausgewählt oder zur Auswahl vorgeschlagen wird.

10. Überwachungssystem (10) für eine Produktionsanlage (1) zum Behandeln von Getränken, umfassend:

- eine elektronische Auswerteeinheit (11), eingerichtet zum Auswählen eines gespeicherten sortenspezifischen Datensatzes (12) mit Initial-Eigenschaftsdaten (13) eines zu behandelnden Getränks (2) und mit Soll-Zustandsdaten (14) der Produktionsanlage und zum Auswerten von chargenspezifischen Datensätzen (15) mit Ist-Zustandsdaten (16) der Produktionsanlage und mit Ist-Eigenschaftsdaten (17) einer darin in Behandlung stehenden Charge (2a) des Getränks; und

- Sensoren, eingerichtet zur Messung der Ist-Zustandsdaten und der Ist-Eigenschaftsdaten

**dadurch gekennzeichnet, dass** die Auswerteeinheit ferner programmiert ist:

- mit einem selbstlernenden Algorithmus zur Ausführung eines Prognosemodells (18), um damit den jeweils ausgewählten sortenspezifischen Datensatz (12) und wenigstens drei während der Behandlung der Charge (2a) gewonnene chargenspezifische Datensätze (15) miteinander in Echtzeit zu verrechnen und auf dieser Grundlage Benutzerinformation (19) auszugeben; und
- zur Ausgabe der Benutzerinformation (19) umfassend eine gemäß Echtzeitauswertung bis zum Ende der Charge und/oder bis zu einer voraussichtlich erforderlichen Zwischenreinigung oder Endreinigung prognostizierte Rest-Produktionsdauer,

wobei die Auswerteeinheit (11) Zugriff auf eine Datenbank (11b) mit historischen chargenspezifischen Datensätzen (15) hat, mit denen während der Behandlung unterschiedlicher Chargen (2a) desselben Getränks (2) ermittelte chargenspezifische Datensätze (15) verglichen werden können, um charakteristische Trends abzuleiten und den selbstlernenden Algorithmus zu trainieren, und

wobei die Sensoren in einem offenen Primärkreis (21) für das Getränk (2) angeordnet sind und umfassen: einen zulaufseitigen pH-Sensor (40); einen zulaufseitigen Brix-Sensor (41); einen zulaufseitigen Leitwertsensor; wenigstens einen Durchflussmesser (39); wenigstens einen Drucksensor (38) vor einer Erhitzungsstufe (5) der Produktionsanlage (1); wenigstens je einen Temperatursensor (37) vor und nach der Erhitzungsstufe; und/oder wenigstens je einen Temperatursensor vor und nach einer Heißhaltestrecke (6) der Produktionsanlage.

11. Überwachungssystem nach Anspruch 10, wobei die Sensoren in wenigstens einem geschlossenen Sekundärkreis (22 - 24) zum Wärmeaustausch mit dem Primärkreis (21) angeordnet sind und umfassen: je einen Temperatursensor (37) im Vorlauf und Rücklauf des Wärmetauschers (26); einen vorlaufseitigen Drucksensor (38); und wenigstens einen Durchflussmesser (39).

12. Produktionsanlage (1) mit dem Überwachungssystem (10) nach Anspruch 10 oder 11 und ferner umfassend: eine damit überwachte Erhitzungsstufe (5) und Heißhaltestrecke (6) zur Haltbarmachung des Getränks (2); eine diesen vorgeschaltete Vorwärmstufe (4) und einen diesen nachgeschalteten Rückkühler (7) mit Sekundärkreis (22) zur Wärmeversorgung der Vorwärmstufe.

## Claims

1. A method for monitoring a production plant (1) for the treatment of beverages, comprising the following steps:

   - selecting a type-specific data set (12) with initial property data (13) of a beverage (2) to be treated and target status data (14) of the production plant;
   - determining at least three batch-specific data sets (15) with actual status data (16) of the production plant and with actual property data (17) of the beverage, in each case by their sensory measurement during the treatment of a batch (2a) of the beverage;
   - electronically evaluating the type-specific and batch-specific data sets in real time in a prediction model (18) based on at least one self-learning algorithm; and
   - outputting user information (19) comprising a remaining production time predicted according to real-time evaluation until the end of the batch and/or until an intermediate cleaning or final cleaning is likely to be required,

   wherein an electronic evaluation unit (11) for executing the prediction model (18) is programmed with the at least one self-learning algorithm, so that the respectively selected type-specific data set (12) and the batch-specific data sets (15) obtained during the treatment of the batch (2a) are calculated together in real time and the user information (19) is output on this basis,
   wherein the evaluation unit (11) accesses a database (11b) with historical batch-specific data sets (15) with which batch-specific data sets (15) determined during the treatment of different batches (2a) of the same beverage (2) are compared in order to derive characteristic trends and to train the self-learning algorithm, and wherein the type-specific and batch-specific data sets (12, 15) relate to an open primary circuit (21) for the beverage (2) and are determined by measurement with an inlet-side pH sensor (40), an inlet-side Brix sensor (41), an inlet-side conductance sensor, at least one flow meter (39), at least one pressure sensor (38) upstream of a heating stage (5) of the production plant (1), at least one temperature sensor (37) upstream and downstream of the heating stage and/or at least one temperature sensor upstream and downstream of a holding section (6) of the production plant.

2. The method according to claim 1, wherein at least the batch-specific data sets (15) further relate to at least one closed secondary circuit (22 - 24) for an exchange medium (29) cooperating with the primary circuit (21).

3. The method according to one of the preceding claims, wherein the user information (19) comprises information as to what proportion of the batch (2a) can be treated up to a predicted localized intermediate cleaning or final cleaning.

4. The method according to at least one of the preceding claims, wherein at least one characteristic number of the treatment is calculated automatically from the batch-specific data sets (15) and is compared to a corresponding type-specific limit value of the treatment, wherein the at least one characteristic number is in particular a logarithmic mean temperature difference ($\Delta T_{in}$) at a heat exchanger (25 - 28) and/or a pressure loss in a heat exchanger and/or a pressure loss in a holding section (6).

5. The method according to at least one of the preceding claims, wherein the batch-specific data sets (15) are stored in a database (11b) and are automatically compared and/or combined with corresponding historical batch-specific data sets (15) of previous batches (2a) of the beverage (2), and wherein the prediction model (18) is initialized and/or adapted based thereon.

6. The method according to claim 2, wherein the batch-specific data set (15) comprises at least one of the following parameters of the secondary circuit (21 -24): inlet flow temperature and return temperature; delivery pressure; flow rate; and control value (Stellwert, SW) of at least one flow-limiting actuator (35) and/or at least one pump (31 - 34).

7. The method according to claim 6, wherein a deviation (Abweichung, AW) of the at least one control value (Stellwert, SW) from a respectively assigned reference value (Referenzwert, RW) of the flow-limiting actuator (35) or of the pump (31 - 34) is calculated as part of the electronic real-time evaluation, which deviation is in each case representative of a proper state immediately after cleaning of the secondary circuit (22 - 24).

8. The method according to claim 7, wherein a cleaning requirement of the secondary circuit is determined by the electronic real-time evaluation if the following condition for the deviation (Abweichung, AW) is fulfilled: (control value - reference value) / (100 - reference value) > 0.3.

9. The method according to at least one of the preceding claims, wherein at least one property of the beverage is monitored in the inlet to the production plant (1), in particular a conductance value and/or Brix value and/or pH value, and based thereon the type-specific data set (12) is automatically selected or proposed for selection.

10. A monitoring system (10) for a production plant (1) for the treatment of beverages, comprising:

- an electronic evaluation unit (11) adapted to select a stored type-specific data set (12) with initial property data (13) of a beverage (2) to be treated and with target status data (14) of the production plant and to evaluate batch-specific data sets (15) with actual status data (16) of the production plant and with actual property data (17) of a batch (2a) of the beverage being treated therein; and
- sensors adapted to measure the actual status data and the actual property data

**characterized in that** the evaluation unit is further programmed

- with a self-learning algorithm for executing a prediction model (18) in order to calculate the respectively selected type-specific data set (12) and at least three batch-specific data sets (15) obtained during the treatment of the batch (2a) together in real time and to output user information (19) based thereon; and
- to output user information (19) comprising a remaining production time predicted according to real-time evaluation until the end of the batch and/or until an intermediate cleaning or final cleaning is likely to be required, wherein the evaluation unit (11) has access to a database (11b) with historical batch-specific data sets (15) with which batch-specific data sets (15) determined during the treatment of different batches (2a) of the same beverage (2) can be compared in order to derive characteristic trends and train the self-learning algorithm, and wherein the sensors are arranged in an open primary circuit (21) for the beverage (2) and comprise: an inlet-side pH sensor (40); an inlet-side Brix sensor (41); an inlet-side conductance sensor; at least one flow meter (39); at least one pressure sensor (38) upstream of a heating stage (5) of the production plant (1); at least one temperature sensor (37) each upstream and downstream of the heating stage; and/or at least one temperature sensor each upstream and downstream of a holding section (6) of the production plant.

11. The monitoring system according to claim 10, wherein the sensors are arranged in at least one closed secondary circuit (22 - 24) for heat exchange with the primary circuit (21) and comprise: one temperature sensor (37) each in the inlet flow and return of the heat exchanger (26); a pressure sensor (38) on the inlet flow side; and at least one flow meter (39).

12. A production plant (1) with the monitoring system (10) according to claim 10 or 11 and further comprising: a heating stage (5) and holding section (6) monitored thereby for the preservation of the beverage (2); a preheating stage (4) connected upstream thereof and a recooler (7) connected downstream thereof with a secondary circuit (22) for supplying heat to the preheating stage.

**Revendications**

1. Procédé de surveillance d'une installation de production (1) permettant de traiter des boissons, comprenant les étapes ci-dessous consistant à :

- sélectionner un ensemble de données spécifique à la variété (12) comprenant des données de propriétés initiales (13) d'une boisson (2) à traiter et des données d'état nominal (14) de l'installation de production ;
- déterminer au moins trois ensembles de données spécifiques au lot (15) comprenant des données d'état effectif (16) de l'installation de production et des données de propriétés effectives (17) de la boisson, respectivement grâce à la mesure desdites données par capteur pendant le traitement d'un lot (2a) de la boisson ;
- évaluer électroniquement en temps réel les ensembles de données spécifiques à la variété et au lot dans un modèle de prévision (18) en se fondant sur au moins un algorithme d'auto-apprentissage ; et
- fournir des informations utilisateur (19) comprenant une durée, prévue conformément à l'évaluation en temps réel, de production restante jusqu'à la fin du lot et/ou jusqu'à un nettoyage intermédiaire ou un nettoyage final vraisemblablement nécessaire,

dans lequel une unité d'évaluation électronique (11) est programmée pour mettre en oeuvre le modèle de prévision (18) comprenant au moins un algorithme d'auto-apprentissage, de sorte que l'ensemble de données spécifique à la variété (12) respectivement sélectionné et les ensembles de données spécifiques au lot (15) obtenus pendant le traitement du lot (2a) sont calculés ensemble en temps réel et les informations utilisateur (19) sont fournies sur ce principe,

dans lequel l'unité d'évaluation (11) accède à une base de données (11b) comprenant des ensembles de données spécifiques au lot (15) d'historique avec lesquels des ensembles de données spécifiques au lot (15) déterminés pendant le traitement de différents lots (2a) de la même boisson (2) sont comparés, afin d'en déduire des tendances caractéristiques et de nourrir l'algorithme d'autoapprentissage, et

dans lequel les ensembles de données spécifiques à la variété et spécifiques au lot (12, 15) concernent un circuit primaire ouvert (21) destiné à la boisson (2) et sont déterminés par mesure avec un capteur de pH (40) situé côté alimentation, un brixmètre (41) situé côté alimentation, un capteur de conductivité situé côté alimentation, au moins un débitmètre (39), au moins un capteur de pression (38) en amont d'une étape de chauffage (5) de l'installation de production (1), au moins respectivement un capteur de température (37) en amont et en aval de l'étape de chauffage et/ou au moins respectivement un capteur de température en amont et en aval d'une section de maintien en température (6) de l'installation de production.

2. Procédé selon la revendication 1, dans lequel au moins les ensembles de données spécifiques au lot (15) concernent en outre au moins un circuit secondaire fermé (22 à 24) coopérant avec le circuit primaire (21) et destiné à un milieu d'échange (29).

3. Procédé selon l'une quelconque des revendications précédentes, dans lequel les informations utilisateur (19) comprennent des informations sur la proportion du lot (2a) pouvant être traitée jusqu'à un nettoyage intermédiaire ou final, en fonction de l'endroit, prévu.

4. Procédé selon au moins l'une quelconque des revendications précédentes, dans lequel au moins un chiffre caractéristique du traitement est calculé de manière automatique à partir des ensembles de données spécifiques au lot (15) et comparé à une valeur limite du traitement correspondante spécifique à la variété, dans lequel le au moins un chiffre caractéristique est en particulier une différence de température logarithmique moyenne ($\Delta T_{ln}$) au niveau d'un échangeur de chaleur (25 à 28) et/ou une perte de pression dans un échangeur de chaleur et/ou une perte de pression dans une section de maintien en température (6).

5. Procédé selon au moins l'une quelconque des revendications précédentes, dans lequel les ensembles de données spécifiques à un lot (15) sont stockés dans une base de données (11b) et sont comparés et/ou combinés de manière automatique avec des ensembles de données spécifiques à un lot (15) d'historique correspondants de lots (2a) précédents de la boisson (2), et dans lequel le modèle de prévision (18) est initialisé et/ou adapté sur ce principe.

6. Procédé selon la revendication 2, dans lequel l'ensemble de données spécifique au lot (15) comprend au moins un des paramètres ci-dessous du circuit secondaire (21 à 24) : température d'admission et de retour; pression de refoulement ; débit ; et valeur de réglage (SW) d'au moins un organe de limitation de débit (35) et/ou d'au moins une pompe (31 à 34).

7. Procédé selon la revendication 6, dans lequel, dans le cadre de l'évaluation électronique en temps réel, un écart (AW) de la au moins une valeur de réglage (SW) par rapport à une valeur de référence (RW) respectivement associée de l'organe de limitation de débit (35) ou de la pompe (31 à 34) est calculé, qui est respectivement représentatif d'un état correct immédiatement après le nettoyage du circuit secondaire (22 à 24).

8. Procédé selon la revendication 7, dans lequel un besoin de nettoyage du circuit secondaire est déterminé grâce à l'évaluation électronique en temps réel si la condition ci-dessous pour l'écart (AW) est satisfaite : (valeur de réglage - valeur de référence) / (100 - valeur de référence) > 0,3.

9. Procédé selon au moins l'une quelconque des revendications précédentes, dans lequel au moins une propriété de la boisson est surveillée au sein de l'alimentation de l'installation de production (1), en particulier une conductivité et/ou une valeur Brix et/ou une valeur de pH, et, sur ce principe, l'ensemble de données spécifique à la variété (12) est automatiquement sélectionné ou proposé en vue d'une sélection.

10. Système de surveillance (10) destiné à une installation de production (1) permettant de traiter des boissons, comprenant :

    - une unité d'évaluation électronique (11), configurée pour sélectionner un ensemble de données spécifique à la variété (12) stocké comprenant des données de propriétés initiales (13) d'une boisson (2) à traiter et des données d'état nominal (14) de l'installation de production et pour évaluer des ensembles de données spécifiques au lot (15) comprenant des données d'état effectif (16) de l'installation de production et des données de propriétés effectives (17) d'un lot (2a) de la boisson en cours de traitement ; et

- des capteurs, configurés pour mesurer les données d'état effectif et les données de propriétés effectives, **caractérisé en ce que** l'unité d'évaluation est en outre programmée :

- avec un algorithme d'auto-apprentissage permettant de mettre en oeuvre un modèle de prévision (18), afin de calculer ensemble en temps réel l'ensemble de données spécifique à la variété (12) respectivement sélectionné et au moins trois ensembles de données spécifiques au lot (15) obtenus pendant le traitement du lot (2a) et de fournir des informations utilisateur (19) sur ce principe ; et

- pour fournir des informations utilisateur (19) comprenant une durée, prévue conformément à l'évaluation en temps réel, de production restante jusqu'à la fin du lot et/ou jusqu'à un nettoyage intermédiaire ou un nettoyage final vraisemblablement nécessaire,

dans lequel l'unité d'évaluation (11) a accès à une base de données (11b) comprenant des ensembles de données spécifiques au lot (15) d'historique avec lesquels des ensembles de données spécifiques au lot (15) déterminés pendant le traitement de différents lots (2a) de la même boisson (2) peuvent être comparés, afin d'en déduire des tendances caractéristiques et de nourrir l'algorithme d'autoapprentissage, et

dans lequel les capteurs sont agencés au sein d'un circuit primaire ouvert (21) destiné à la boisson (2) et comprennent : un capteur de pH (40) situé côté alimentation ; un brixmètre (41) situé côté alimentation ; un capteur de conductivité situé côté alimentation ; au moins un débitmètre (39) ; au moins un capteur de pression (38) en amont d'une étape de chauffage (5) de l'installation de production (1) ; au moins un capteur de température (37) en amont et en aval de l'étape de chauffage ; et/ou au moins respectivement un capteur de température en amont et en aval d'une section de maintien en température (6) de l'installation de production.

11. Système de surveillance selon la revendication 10, dans lequel les capteurs sont agencés au sein d'au moins un circuit secondaire fermé (22 à 24) permettant l'échange de chaleur avec le circuit primaire (21) et comprennent : respectivement un capteur de température (37) à l'admission et au retour de l'échangeur de chaleur (26) ; un capteur de pression (38) situé côté admission ; et au moins un débitmètre (39).

12. Installation de production (1) comprenant le système de surveillance (10) selon la revendication 10 ou 11 et comprenant en outre : un étage de chauffage (5) ainsi surveillé et une section de maintien en température (6) permettant de conserver la boisson (2) ; un étage de préchauffage (4) en amont dudit étage et un refroidisseur à recyclage (7) situé en aval dudit étage et muni d'un circuit secondaire (22) permettant de fournir de la chaleur à l'étage de préchauffage.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102019203062 A1
- DE 102019203412 A1